# EUROPÄISCHE PATENTSCHRIFT

(11) **EP 1 406 832 B1**
(45) Veröffentlichungstag und Bekanntmachung des Hinweises auf die Patenterteilung: **09.08.2006**
(21) Anmeldenummer: 02745423.0
(22) Anmeldetag: 02.07.2002
(51) Int. Cl.: C01B 21/14, B01D 3/16, B01J 19/30

(54) **VERFAHREN ZUR HERSTELLUNG EINER SALZFREIEN, WÄSSRIGEN HYDROXYLAMINLÖSUNG**
METHOD FOR THE PRODUCTION OF A SALT-FREE AQUEOUS HYDROXYLAMINE SOLUTION
PROCEDE POUR PRODUIRE UNE SOLUTION D'HYDROXYLAMINE AQUEUSE EXEMPTE DE SEL

(30) Priorität: 04.07.2001 DE 10131787
(43) Veröffentlichungstag der Anmeldung: 14.04.2004
(73) Patentinhaber: BASF Aktiengesellschaft, 67056 Ludwigshafen (DE)
(72) Erfinder: WOSTBROCK, Karl-Heinz, 67591 Mörstadt (DE); THIEL, Joachim, 67435 Neustadt (DE); KRÜGER, Heinz, 67117 Limburgerhof (DE); STRÖFER, Eckhard, 68163 Mannheim (DE); WEBER, Markus, 67061 Ludwigshafen (DE); GERBER, Bernd, 67069 Ludwigshafen (DE); RUMPF, Bernd, 68766 Hockenheim (DE); SACHWEH, Bernd, 67149 Meckenheim (DE); KERTH, Steffen, 67063 Ludwigshafen (DE)
(86) Internationale Anmeldenummer: PCT/EP2002/007285
(87) Internationale Veröffentlichungsnummer: WO 2003/004409

(56) Entgegenhaltungen:
- EP-A- 0 188 387
- WO-A-97/22551
- DE-A- 19 725 851
- US-B1- 6 235 162
- K. SATTLER (ED.): "Thermische Trennverfahren: Grundlagen, Auslegung, Apparate (3rd edition)" 2001 , WILEY-VCH , WEINHEIM (DE) XP002217526 Seite 242 -Seite 249; Abbildung 2.80
- D.W. GREEN (ED.): "Perry's Chemical Engineer's Handbook" 1997 , MCGRAW-HILL , NEW YORK (USA) XP002217527 Seite 14-23 -Seite 14-61

## Beschreibung

Die vorliegende Erfindung betrifft ein Verfahren zur Herstellung einer salzfreien, wässrigen Hydroxylaminlösung durch Destillation einer wäßrigen Lösung eines Hydroxylammoniumsalzes und einer Base in einer Bodenkolonne mit mindestens zwei mechanischen Böden, dadurch gekennzeichnet, daß sich oberhalb mindestens eines Bodens der Bodenkolonnen über den Querschnitt der Kolonne Füllkörper befinden.

Hochreine, konzentrierte, wässrige Hydroxylaminlösungen werden unter anderem in der Elektronikindustrie, z.B. in Verbindung mit anderen Stoffen zum Reinigen von Platinen oder Silizium-Wafern, verwendet. Für die Anwendung in der Elektronikindustrie werden üblicherweise Konzentrationen der Verunreinigungen, insbesondere Metallionen, weit unter 1 ppm, sogenannte "Electronic grade"-Ware, gefordert. Dabei nehmen die Anforderungen an die Reinheit der wäßrigen Hydroxylamin-Lösungen ständig zu.

Hydroxylamin wird großtechnisch als Hydroxylammoniumsalz, üblicherweise als Hydroxylammoniumsulfat, hergestellt. Zur Herstellung salzfreier, wässriger Hydroxylamin-Lösungen wird eine wässrige Lösung eines Hydroxylammoniumsalzes mit einer Base versetzt und eine wässrige Hydroxylamin-Lösung von dem Gemisch üblicherweise durch Destillation abgetrennt, beispielsweise gemäß US-A-5,472,679, WO 97/22551, WO98/57886, DE 1954775.8, WO 99/07637.

Die Destillation von wässrigen, Hydroxylamin enthaltenden Lösungen, selbst im Labormaßstab, wird als eine besonders gefährliche Operation bezeichnet: siehe Roth-Weller: Gefährliche Chemische Reaktionen, Stoffinformationen Hydroxylamin, Seite 3, 1984, 2, Eco-med-Verlag.

Demgemäß erfordert die genannte Destillation einen hohen technischen Aufwand und einen großen Zeitbedarf.

Zudem enthalten wässrige Hydroxylaminlösungen trotz der Destillation aus der Herstellung Verunreinigungen, wie Natriumsulfat oder andere Metallverbindungen in unerwünscht großen Mengen.

Der vorliegenden Erfindung lag daher die Aufgabe zugrunde, ein Verfahren zur Herstellung salzfreier, wässriger Hydroxylamin-Lösungen durch Destillation bereitzustellen, bei dem die wässrigen Hydroxylamin-Lösungen mit weniger Verunreinigungen ohne Erhöhung des technischen Aufwands, des Zeitbedarfs oder eines Sicherheitsrisikos erhalten werden.

Demgemäß wurde das eingangs definierte Verfahren gefunden.

In dem erfindungsgemäßen Verfahren setzt man eine wässrige Lösung eines Hydroxylammonium-Salzes und einer Base ein. Die Lösung kann weitere Stoffe enthalten, die das erfindungsgemäße Verfahren nicht nachteilig beeinflussen, wie Hydroxylamin, oder Stabilisator, wie 1,2-trans-(N,N,N',N'-tetraessigsäure)-Cyclohexandiamin oder dessen Salze, beispielsweise Natrium- oder Ammoniumsalze oder die in WO 97/22551 beschrieben Stabilisatoren.

Als Hydroxylammonium-Salz kommen Salze organischer Säuren, wie Ameisensäure, Essigsäure, vorzugsweise Salze anorganischer Säuren, wie Schwefelsäure, Phosphorsäure, Salzsäure, oder Gemische solcher Salze in Betracht.

Solche Hydroxylammonium-Salze sowie deren Herstellung sind an sich bekannt.

Zur Herstellung der Lösung eines Hydroxylammonium-Salzes und einer Base kann man die Hydroxylammoniumsalze vorteilhaft als wässrige Lösung mit einem Gehalt an Hydroxylammoniumsalz von 1 bis 50, insbesondere 25 bis 38 Gew.-% einsetzen.

Als Base kommen Oxide oder Hydroxide der Alkalien, wie Lithiumhydroxid, Natriumhydroxid, Kaliumhydroxid, der Erdalkalien, wie Calciumhydroxid, Strontiumhydroxid, Bariumhydroxid, Ammoniak, Amine, wie Monoamine, Diamine oder Triamine, beispielsweise Methylamin, Dimethylamin, Trimethylamin, Ethylamin, Diethylamin, Triethylamin, Mono-, Di oder Trialkanolamine, wie Diethanolamin und cyclische Amine, wie Pyrrolidin oder Piperidin, sowie Gemische solcher Basen in Betracht.

Die Base kann man vorteilhaft als wässrige Lösung einsetzen, vorzugsweise in einer Konzentration von 1 bis 30, insbesondere 8 bis 14 mol Basenfunktionalität pro Liter.

Die Menge an Base sollte so gewählt werden, dass das Hydroxylammonium-Salz vollständig oder zumindest zum überwiegenden Teil in freies Hydroxylamin überführt wird. Dies kann kontinuierlich oder diskontinuierlich und bei Temperaturen im Bereich von etwa 10°C bis 120°C erfolgen.

Die in dem erfindungsgemäßen Verfahren eingesetzte wässrige Lösung eines Hydroxylammonium-Salzes und einer Base sollte einen Gehalt an Hydroxylamin von 2 bis 25, vorzugsweise 8 bis 12 Gew% aufweisen.

Erfindungsgemäß erfolgt die Herstellung der salzfreien, wässrigen Hydroxylamin-Lösung durch Destillation in einer Bodenkolonne mit mindestens 10 praktischen Böden.

Vorteilhaft sollte die Kolonne eine praktische Bodenzahl im Bereich von 10 bis 80 aufweisen. Als Böden kommen Querstromböden wie Siebböden, Ventilböden, Glockenböden und Tunnelböden oder Dualflow-Böden , vorzugsweise Siebböden in Betracht. Die Abstände der Böden voneinander sollte im Bereich von 200 bis 900 mm, vorzugsweise 300 bis 600 mm liegen.

Die Kolonne und Böden können aus nicht-metallischen Werkstoffen, wie Glas, Keramik, Kunststoffen, gefertigt werden. Dadurch ist die durch Metallionen initiierte Zersetzung ausgeschlossen. Überraschenderweise hat sich aber gezeigt, daß die Kolonne auch aus speziellen metallischen Werkstoffen, wie Platin, Silber oder Zirkon gefertigt werden können, ohne dass eine signifikant erhöhte Zersetzung des Hydroxylamins zu beobachten ist.

Das Rücklaufverhältnis im Verstärkerteil kann man vorteilhaft so einregeln, dass es im Bereich von 0,2 bis 2 liegt.

Erfindungsgemäß befinden sich oberhalb mindestens eines Bodens der Bodenkolonne über den Querschnitt der Kolonne klassische Füllkörper wie Raschig-Ringe, Pallringe, Sattelkörper, moderne Hochleistungs-Füllköper wie der Hiflow-Ring (Firma Rauschert (Steinwiesen, Deutschland)), Super-Raschig-Ringe (Firma Raschig (Ludwigshafen, Deutschland)), Cascade-Mini-Ringe (Firma Koch-Glitsch (Wichita, USA)), IMTP-Ringe (Firma Norton (Akron, USA) oder Nutter-Ringe (Firma Sulzer Chemtech (Wintherthur, Schweiz)) oder strukturierte Packungen wie Mellapak, Mellapak Plus oder Gewebepackung, vorzugsweise moderne Hochleistungs-Füllkörper.

Die Füllkörper sollten gegenüber der zu destillierenden Lösung inert sein, beispielsweise aus Kunststoffen oder speziellen metallischen Werkstoffen vorzugsweise aus perfluorierten Kunststoffen (z.B. TFM, PFA, Teflon).

Die Füllhöhe der Füllkörper zwischen den Böden sollte 50 bis 300 mm, vorzugsweise 100 mm bis 200 mm betragen. Der Abstand zwischen der Füllkörper-Schüttung und dem Boden, oberhalb dessen die Füllkörper-Schüttung installiert ist, liegt zwischen 0 und 600 mm, bevorzugt 100 mm bis 300 mm. Der Abstand zwischen der Füllkörper-Schüttung und dem Boden, unterhalb dessen die Füllkörper-Schüttung installiert ist beträgt, 0 bis 300 mm, bevorzugt 30 bis 100 mm.

Der Druck in der Bodenkolonne beträgt im allgemeinen 5 bis 200 kPa (0,05 bis 2 bar), vorzugsweise 10 bis 110 kPa (0,1 bis 1,1 bar). Besonders bevorzugt ist es, die Bodenkolonne bei einem Druck im Bereich von 50 bis 110 kPa (0,5 bis 1,1 bar) und insbesondere bei Normaldruck zu betreiben. Der Druck bezieht sich dabei auf den Druck am Kopf der Bodenkolonne.

Die in der Bodenkolonne herrschenden Temperaturen richten sich nach dem Druck, bei dem die Bodenkolonne betrieben wird. Sie liegen im allgemeinen im Bereich von 30 bis 130°C, vorzugsweise 80 bis 130°C.

Die zur Destillation erforderliche Energie kann vorteilhaft durch Einleitung von Wasserdampf im Sumpfbereich erfolgen. Die Temperatur des eingeleiteten Wasserdampfs sollte dabei im allgemeinen im Bereich von 80 bis 180°C liegen, bevorzugt im Bereich von 80 bis 140 °C.

Die in dem erfindungsgemäßen Verfahren eingesetzte wässrige Lösung eines Hydroxylammonium-Salzes und einer Base kann man auf den Kopf der Bodenkolonne, einen der oberen Böden oder vorteilhaft auf einen der mittleren Böden erfolgen. Gegebenenfalls kann man über dem Zulaufboden noch eine Einrichtung zum Abscheiden mitgerissener Tröpfchen, beispielsweise einen Demister, installieren.

In dem erfindungsgemäßen Verfahren erhält man als Sumpfprodukt eine wässrige Lösung enthaltend ein Salz aus dem Anion des Hydroxylammoniumsalzes und der Kation der Base.

In einer bevorzugten Ausführungsform kann man als Bodenkolonne eine Seitenabzugskolonne einsetzen.

Dabei kommt eine Entnahme der salzfreien, wässrigen Hydroxylaminlösung am Seitenabzug in Betracht. Am Kopf der Kolonne erhält man dann im allgemeinen Wasser.

Die erfindungsgemäß erhaltene salzfreie, wässrige Hydroxylamin-Lösung weist im allgemeinen einen Gehalt an Hydroxylamin von 10 bis 200, vorzugsweise 80 bis 120 g/Liter auf.

Die nach dem erfindungsgemäßen Verfahren erhaltene salzfreie, wässrige Hydroxylaminlösung weist eine höhere Reinheit auf als eine nach bekannten Destillationsverfahren erhaltene Lösung. Zudem ist die Verweilzeit der Destillationsmischung in der Kolonne kürzer und somit die thermische Belastung geringer als bei bekannten Verfahren. Ferner wird bei gleicher Kolonnengröße und gleichem Holdup der Kolonne die Kapazität der Kolonne erhöht. Falls die Kolonne einen Demister enthält, wird dieser gegenüber einem bekannten Verfahren entlastet.

Die erhaltene Hydroxylamin-Lösung kann gewünschtenfalls in einer Destillationskolonne aufkonzentriert werden. Es kann vorteilhaft sein, vor der Destillation einen Stabilisator zuzugeben. Die Hydroxylamin-Lösung kann man vorteilhaft in Höhe von etwa einem Drittel der theoretischen Bodenzahl der Destillationskolonne einspeisen. Man erhält über Kopf weitgehend hydroxylamin-freies Wasser und am Sumpf eine Hydroxylamin-Lösung, deren Konzentration von den Destillationsbedingungen abhängig ist.

Im allgemeinen arbeitet man in der Destillationskolonne mit einem Druck im Bereich von 1 bis 200 kPa (0,01 bis 2 bar), vorzugsweise 5 bis 120 kPa (0,05 bis 1,2 bar), besonders bevorzugt 30 bis 110 kPa (0,3 bis1,1 bar), wobei sich der Druck jeweils auf dem Druck am Kopf der Kolonne bezieht. Je höher das Hydroxylamin aufkonzentriert werden soll, umso schonender (niedriger Druck und niedrige Temperatur) muss destilliert werden. Die Destillation kann kontinuierlich oder diskontinuierlich erfolgen.

Die in der Destillationskolonne herrschenden Temperaturen richten sich nach dem Druck, bei dem die Destillationskolonne betrieben wird. Sie liegen im allgemeinen im Bereich von 10 bis 160°C, vorzugsweise 60 bis 120°C.

Das über Kopf der Destillationskolonne abgezogene Wasser bzw. der Brüden kann wieder direkt oder nach Kompression oder Überhitzung als Stripdampf in den Sumpf der im erfindungsgemäßen Verfahren eingesetzten Kolonne zurückgeführt oder als Abwasser der Abwasseraufbereitung zugeführt werden.

Gegebenenfalls kann man über dem Zulaufboden eine Einrichtung zur Abscheidung mitgerissener Tröpfchen, beispielsweise einen Demister, installieren.

Als Destillationskolonne können an sich übliche Kolonnen in an sich bekannter Weise eingesetzt werden. Vorteilhaft kann man als Destillationskolonne eine Bodenkolonne mit mindestens zwei Böden einsetzen.

Vorteilhaft sollte die Kolonne eine praktische Bodenzahl im Bereich von 4 bis 60 aufweisen. Als Böden kommen Querstromböden wie Siebböden, Ventilböden, Glockenböden und Tunnelböden oder Dualflow-Böden , vorzugsweise Siebböden in Betracht. Die Abstände der Böden voneinander sollte im Bereich von 200 bis 900 mm, vorzugsweise 300 bis 600 mm liegen.

Die Kolonne und Böden können aus nicht-metallischen Werkstoffen, wie Glas, Keramik, Kunststoffen, gefertigt werden. Dadurch ist die durch Metallionen initiierte Zersetzung ausgeschlossen. Überraschenderweise hat sich aber gezeigt, daß die Kolonne auch aus speziellen metallischen Werkstoffen, wie Platin, Silber oder Zirkon gefertigt werden können, ohne dass eine signifikant erhöhte Zersetzung des Hydroxylamins zu beobachten ist.

Vorteilhaft wird ein Fallfilmverdampfer zum Beheizen des Kolonnensumpfes verwendet, es lassen sich natürlich auch andere übliche Sumpfbeheizer, wie Natur- oder Zwangsumlaufverdampfer, Plattenwärmetauscher etc. einsetzen.

Das Rücklaufverhältnis im Verstärkerteil kann man vorteilhaft so einregeln, dass es im Bereich von 0,2 bis 2 liegt.

Erfindungsgemäß befinden sich oberhalb mindestens eines Bodens der Bodenkolonne über den Querschnitt der Kolonne klassische Füllkörper wie Raschig-Ringe, Pallringe, Sattelkörper, moderne Hochleistungs-Füllköper wie der Hiflow-Ring (Firma Rauschert (Steinwiesen, Deutschland)), Super-Raschig-Ringe (Firma Raschig (Ludwigshafen, Deutschland)), Cascade-Mini-Ringe (Firma Koch-Glitsch (Wichita, USA)), IMTP-Ringe (Firma Norton (Akron, USA) oder Nutter-Ringe (Firma Sulzer Chemtech (Wintherthur, Schweiz)) oder strukturierte Packungen wie Mellapak, Mellapak Plus oder Gewebepackung, vorzugsweise moderne Füllkörper.

Die Füllkörper sollten gegenüber der zu destillierenden Lösung inert sein, beispielsweise aus Kunststoffen oder speziellen metallischen Werkstoffen vorzugsweise aus perfluorierten Kunststoffen (z.B. TFM, PFA, Teflon).

Die Füllhöhe der Füllkörper zwischen den Böden sollte 50 bis 300 mm, vorzugsweise 100 mm bis 200 mm betragen. Der Abstand zwischen der Füllkörper-Schüttung und dem Boden, oberhalb dessen die Füllkörper-Schüttung installiert ist, liegt zwischen 0 und 600 mm, bevorzugt 100 mm bis 300 mm. Der Abstand zwischen der Füllkörper-Schüttung und dem Boden, unterhalb dessen die Füllkörper-Schüttung installiert ist beträgt, 0 bis 300 mm, bevorzugt 30 bis 100 mm.

Die aufkonzentrierte, wässrige Hydroxylamin-Lösung, die vorzugsweise einen Hydroxylamin-Gehalt im Bereich von 20 bis 60 Gew.-% aufweist, wird im allgemeinen als Sumpfprodukt erhalten.

### Beispiele

### Vergleichsbeispiel 1

In einer Bodenkolonne mit 60 Böden, einem Durchmesser von 1,5 m und einem Kimre-Demister (zweistufig ausgeführter Monofilament-Gewebe-Demister, bei dem die erste Stufe in geflutetem Zustand betrieben wird) oberhalb des 30. Bodens (von unten gerechnet) wurde auf den 30. Boden in einer Menge von 2,5 t/h eine Lösung von 8 Gew.-% Hydroxylamin (freie Base), 17,5 Gew.-ppm Natriumsulfat und 1 Gew.-% Natriumhydroxid in Wasser gegeben.

Am Kopf wurde bei einer Rücklaufmenge von 2,2 t/h und einer Zugabe von 10 kg/h Stabilisator eine Menge von 5,5 t/h Wasser mit einer Verunreinigung von 1000 Gew.-ppm Hydroxylamin-Gehalt entnommen.

Über einen Seitenabzug am 31. Boden wurden 2,2 t/h einer Lösung von 8,9 Gew.-% Hydroxylamin in Wasser mit einer Verunreinigung von 10 Gew.-ppm Na⁺ (als Sulfat oder Hydroxid) entnommen.

Am Sumpf wurden 7,6 t/h Dampf (1,5 bar) zugeführt und 2,5 t/h einer Lösung des restlichen Natriumsulfats und restlichen Natriumhydroxids in Wasser mit einer Verunreinigung von 3000 Gew.-ppm Hydroxylamin entnommen.

Der Druckverlust über die Kolonne betrug 230 mbar.

Die Tropfengröße oberhalb des Demisters betrug etwa 50 µm.

### Beispiel 1

Es wurde verfahren wie in Vergleichsbeispiel 1 mit der Ausnahme, daß sich auf den Böden jeweils eine 150 mm hohe Schüttung aus Hiflow-Ringen 38/1 (Firma Rauschert, Steinwiesen, Deutschland) befand.

Das Kopfprodukt enthielt nur 800 Gew.-ppm Hydroxylamin als Verunreinigung.

Das am Seitenabzug erhaltene Produkt enthielt nur 2 ppm Na⁺ (als Sulfat oder Hydroxid) als Verunreinigung.

Das Sumpfprodukt enthielt nur 1500 Gew.-ppm Hydroxylamin als Verunreinigung.

Der Druckverlust über die Kolonne betrug 240 mbar.

Die Tropfengröße oberhalb des Demisters betrug etwa 5 µm.

### Beispiel 2

Es wurde verfahren wir in Beispiel 1 mit der Ausnahme, daß eine Menge von 3,5 t/h zugeführt wurde.

Am Kopf wurde bei einer Rücklaufmenge von 3,1 t/h und einer Zugabe von 14 kg/h Stabilisator eine Menge von 7,7 t/h Wasser mit einer Verunreinigung von 800 Gew.-ppm Hydroxylamin-Gehalt entnommen.

Über einen Seitenabzug am 31. Boden wurden 3,1 t/h einer Lösung von 8,9 Gew.-% Hydroxylamin in Wasser mit einer Verunreinigung von 2 Gew.-ppm Na⁺ (als Sulfat oder Hydroxid) entnommen.

Am Sumpf wurden 10,7 t/h Dampf (1,5 bar) zugeführt und 3,5 t/h einer Lösung des restlichen Natriumsulfats und restlichen Natriumhydroxids in Wasser mit einer Verunreinigung von 1500 Gew.-ppm Hydroxylamin entnommen.

Der Druckverlust über die Kolonne betrug 350 mbar.

Die Tropfengröße oberhalb des Demisters betrug etwa 5 µm.

### Vergleichsbeispiel 2

Es wurde verfahren wie in Beispiel 2 mit der Ausnahme, daß sich auf den Böden der Kolonne keine Schüttung aus Füllkörpern befand.

Unter den hohen Last-Bedingungen des Beispiels 2 war keine sinnvolle Trennung zu erzielen.

## Patentansprüche

1. Verfahren zur Herstellung einer salzfreien, wässrigen Hydroxylaminlösung durch Destillation einer wäßrigen Lösung eines Hydroxylammoniumsalzes und einer Base in einer Bodenkolonne mit mindestens einem mechanischen Böden, **dadurch gekennzeichnet, daß** sich oberhalb mindestens eines Bodens der Bodenkolonne über den Querschnitt der Kolonne Füllkörper oder strukturierte Packung befinden.

2. Verfahren nach Anspruch 1, wobei die Bodenkolonne 10 bis 80 praktische Böden aufweist.

3. Verfahren nach Anspruch 1 oder 2, wobei man als Füllkörper klassische Füllkörper, Hochleistungs-Füllkörper oder strukturierte Packungen einsetzt.

4. Verfahren nach den Ansprüchen 1 bis 3, wobei die Temperatur in der Bodenkolonne im Bereich von 80°C bis 130°C liegt.

5. Verfahren nach den Ansprüchen 1 bis 4, wobei man als Sumpfprodukt eine wässrige Lösung enthaltend ein Salz aus dem Anion des Hydroxylammoniumsalzes und der Kation der Base erhält.

6. Verfahren nach den Ansprüchen 1 bis 5, wobei die Bodenkolonne eine Seitenabzugskolonne ist.

7. Verfahren nach Anspruch 6, wobei man die salzfreie, wässrige Hydroxylaminlösung am Seitenabzug erhält.

8. Verfahren nach Anspruch 6 oder 7, wobei man als Kopfprodukt Wasser erhält.

## Claims

1. A process for preparing a salt-free aqueous hydroxylamine solution by distilling an aqueous solution of a hydroxylammonium salt and a base in a tray column having at least one mechanical tray, wherein random or structured packings are located above at least one tray of the tray column over the cross section of the column.

2. The process according to claim 1, wherein the tray column has from 10 to 80 actual trays.

3. The process according to claim 1 or 2, wherein packing elements used comprise conventional random packings, high-performance random packings or structured packings.

4. The process according to any of claims 1 to 3, wherein the temperature in the tray column is in the range from 80°C to 130°C.

5. The process according to any of claims 1 to 4, wherein the bottom product is an aqueous solution comprising a salt of the anion of the hydroxylammonium salt and the cation of the base.

6. The process according to any of claims 1 to 5, wherein the tray column is a side offtake column.

7. The process according to claim 6, wherein the salt-free aqueous hydroxylamine solution is obtained at the side offtake.

8. The process according to claim 6 or 7, wherein water is obtained as the column top product.

## Revendications

1. Procédé de préparation d'une solution aqueuse d'hydroxylamine, exempte de sel, par distillation d'une solution aqueuse d'un sel d'hydroxylammonium et d'une base dans une colonne à plateaux comportant au moins un plateau mécanique, **caractérisé en ce qu'**au-dessus d'au moins un plateau de la colonne à plateaux, il y a sur la section transversale de la colonne des corps de remplissage ou un garnissage structuré.

2. Procédé suivant la revendication 1, dans lequel la colonne à plateaux présente 10 à 80 plateaux pratiques.

3. Procédé suivant la revendication 1 ou 2, dans lequel on met en oeuvre, comme corps de remplissage, des corps de remplissage classiques, des corps de remplissage à haut rendement ou des garnissages structurés.

4. Procédé suivant les revendications 1 à 3, dans lequel la température dans la colonne à plateaux est de l'ordre de 80°C à 130°C.

5. Procédé suivant les revendications 1 à 4, dans lequel, comme produit de fond de colonne, on obtient une solution aqueuse contenant un sel formé de l'anion du sel d'hydroxylammonium et du cation de la base.

6. Procédé suivant les revendications 1 à 5, dans lequel la colonne à plateaux est une colonne à soutirage latéral.

7. Procédé suivant la revendication 6, dans lequel on obtient la solution aqueuse d'hydroxylamine, exempte de sel, au soutirage latéral.

8. Procédé suivant la revendication 6 ou 7, dans lequel on obtient de l'eau comme produit de tête.
